# EUROPEAN PATENT APPLICATION

(11) **EP 4 790 793 A2**
(43) Date of publication of application: **12.08.2026**
(21) Application number: 25219536.7
(22) Date of filing: 28.11.2025
(51) Int. Cl.: H01M 10/613, H01M 10/6554, H01M 10/6568, H01M 50/375, H01M 50/618, H01M 10/6553

(54) **BATTERY MODULE**

(30) Priority: 05.02.2025 KR 20250014471
(71) Applicant: SAMSUNG SDI CO., LTD., Yongin-si, Gyeonggi-do 17084 (KR)
(72) Inventor: SEOL, Junha, 17084 Yongin-si (KR)
(74) Representative: Marks & Clerk LLP

(57) **Abstract**

A battery module includes a plurality of battery cells, a cooling plate positioned on the plurality of battery cells and including a main flow path, a first supply portion for supplying coolant to the main flow path, and a second supply portion for supplying fire extinguishing fluid to the main flow path, wherein the coolant and the fire extinguishing fluid are selectively supplied to the main flow path.

## Description

### FIELD

The disclosure relates to a battery module.

### BACKGROUND

Secondary batteries are batteries that can be charged and discharged, unlike primary batteries that cannot be recharged. Low-capacity secondary batteries are used in small, portable electronic devices such as smartphones, feature phones, laptops, digital cameras, and camcorders, while high-capacity secondary batteries are widely used as power sources for driving motors in hybrid cars, electric cars, or the like and as power storage batteries. Such a secondary battery includes an electrode assembly including a positive electrode and a negative electrode, a case for accommodating the electrode assembly, and electrode terminals connected to the electrode assembly.

The herein-described information disclosed in the background technology of this disclosure is only intended to improve understanding of the background of the disclosure and therefore may include information that does not constitute prior art.

### SUMMARY

The disclosure provides a battery module with improved fire suppression and extinguishing functions.

However, the technical problems to be solved by the disclosure are not limited to the problems described herein, and other problems not mentioned can be clearly understood by those skilled in the art from the description of the disclosure described herein.

Embodiments of the disclosure disclose a battery module, including: a plurality of battery cells; a cooling plate positioned on the plurality of battery cells and including a main flow path; a first supply portion for supplying coolant to the main flow path; and a second supply portion for supplying fire extinguishing fluid to the main flow path, wherein the coolant and the fire extinguishing fluid are selectively supplied to the main flow path.

In embodiments, the battery module may further include a first flow path connecting the main flow path to the first supply portion and a second flow path connecting the main flow path to the second supply portion.

In embodiments, the battery module may further include a third flow path through which the coolant circulated in the main flow path flows out and which is connected to the first supply portion, and the first supply portion, the first flow path, the main flow path, and the third flow path may form a closed loop.

In embodiments, a first valve, a second valve, and a third valve may be positioned in the first flow path, the second flow path, and the third flow path, respectively.

In embodiments, the battery module may further include a pressure sensor which measures the pressure of the main flow path and a control unit which controls the operations of the first valve, the second valve, and the third valve based on the pressure sensed by the pressure sensor.

In embodiments, the first valve and the third valve may be configured to operate inversely to the second valve.

In embodiments, the cooling plate may include a first region and a second region, and a melting point of the first region may be higher than a melting point of the second region.

In embodiments, the plurality of battery cells each may include a vent, and the second region may be positioned to overlap with the vent.

In embodiments, the second region may be arranged at a position overlapping with the main flow path.

In embodiments, the plurality of battery cells each may include terminal portions, and the cooling plate may include a plurality of holes through which the terminal portions are arranged to penetrate.

Embodiments of the disclosure disclose a battery module, including: a plurality of battery cells, each of which includes a vent; and a cooling plate positioned on the plurality of battery cells, wherein the cooling plate includes a first region and a second region, and the second region is positioned to overlap with the vent, and a melting point of the first region is higher than a melting point of the second region.

In embodiments, the second region may include a first layer and a second layer on the first layer along the height direction of the cooling plate, the layers having different materials.

In embodiments, the cooling plate may include a main flow path therein, and the second region may be positioned to overlap with the main flow path.

In embodiments, the battery module may include a first supply portion for supplying coolant to the main flow path and a second supply portion for supplying fire extinguishing fluid to the main flow path, and the coolant and the fire extinguishing fluid may be selectively supplied to the main flow path.

In embodiments, the battery module may further include a first flow path connecting the main flow path to the first supply portion and a second flow path connecting the main flow path to the second supply portion.

In embodiments, the battery module may further include a third flow path through which the coolant circulated in the main flow path flows out and which is connected to the first supply portion, and the first supply portion, the first flow path, the main flow path, and the third flow path may form a closed loop.

In embodiments, a first valve, a second valve, and a third valve may be positioned in the first flow path, the second flow path, and the third flow path, respectively.

In embodiments, the battery module may further include a pressure sensor which measures the pressure of the main flow path and a control unit which controls the operations of the first valve, the second valve, and the third valve based on the pressure sensed by the pressure sensor.

In embodiments, the plurality of battery cells each may include terminal portions, and the cooling plate may include a plurality of holes through which the terminal portions are arranged to penetrate.

In embodiments, an insulation layer may be arranged on each of the inner surfaces of the plurality of holes.

Embodiments of the disclosure provide a method for manufacturing a battery module, including: providing a plurality of battery cells; providing a cooling plate positioned on the plurality of battery cells and including a main flow path; providing a first supply portion for supplying coolant to the main flow path; and providing a second supply portion for supplying fire extinguishing fluid to the main flow path, wherein the coolant and the fire extinguishing fluid are selectively supplied to the main flow path.

At least some of the above and other features of the invention are set out in the claims.

### BRIEF DESCRIPTION OF THE DRAWINGS

The following drawings attached to the specification illustrate preferred embodiments of the disclosure and, together with the detailed description of the disclosure described herein, serve to further understand the technical idea of the disclosure; therefore, the disclosure should not be interpreted as being limited to matters described in such drawings:
FIG. 1 is an exploded perspective view schematically illustrating an example of a battery module according to embodiments of the disclosure;
FIG. 2 is a perspective view schematically illustrating an example of a battery cell of the battery module of FIG. 1;
FIG. 3 is a cross-sectional view schematically illustrating an example of a cross section taken along by line III-III' of FIG. 2;
FIG. 4 is a block diagram of a fire extinguishing system according to embodiments of the disclosure;
FIG. 5 is an exploded perspective view schematically illustrating an example of a battery module according to embodiments of the disclosure;
FIG. 6 is a cross-sectional view schematically illustrating an example of a cross section taken along by line II-II' of FIG. 5; and
FIG. 7 is an enlarged perspective view of a battery cell and a cooling plate of FIG. 1.

### DETAILED DESCRIPTION

Hereinafter, preferred embodiments of the disclosure will be described in detail with reference to the attached drawings. Prior to this, terms or words used in the specification and claims should not be interpreted as limited to usual or dictionary meanings and should be interpreted as meanings and concepts that conform to the technical idea of the disclosure based on the principle that the inventor can appropriately define the concept of a term to explain his or her own disclosure in the best way. Therefore, the embodiments described in the specification and the configurations illustrated in the drawings are only some of the most preferred embodiments of the disclosure and do not represent all the technical idea of the disclosure, and it should be understood that there may be various equivalents and modified examples that may replace them at the time of filing the application.

In some embodiments, when used herein, the words "comprise", "include"; and/or "comprising", "including" specify the presence of stated features, numbers, steps, operations, members, components and/or groups thereof, but do not exclude the presence or addition of one or more other features, numbers, operations, members, components and/or groups thereof.

In some embodiments, to aid understanding of the disclosure, the attached drawings are not drawn to the actual scale and the dimensions of some components may be exaggerated. In some different embodiments, the same reference numbers may be assigned to the same components.

Although the terms first, second, or the like are used to describe various components, these components are not limited by the terms. These terms are used only to distinguish a component from another, and unless otherwise specifically stated, it is to be understood that a first component may also be a second component.

Throughout the specification, unless otherwise specifically stated, each component may be singular or plural.

Any configuration being arranged "at the top (or bottom) of" a component or "on (or below)" a component may mean not only that any configuration is arranged in contact with the upper surface (or lower surface) of the component, but also that other configurations may be interposed between the component and any configuration arranged on (or below) the component.

In some embodiments, when it is described that a component is "connected," "coupled," or "linked" to another component, it should be understood that the components may be directly connected or linked to one another, but that other component may also be "interposed" between each component, or that each component may be "connected," "coupled," or "linked" through other component. In some embodiments, when we say that a part is electrically coupled to another part, this may include not only cases where the parts are directly connected to one another, but also cases where the parts are connected to one another interposed another element therebetween.

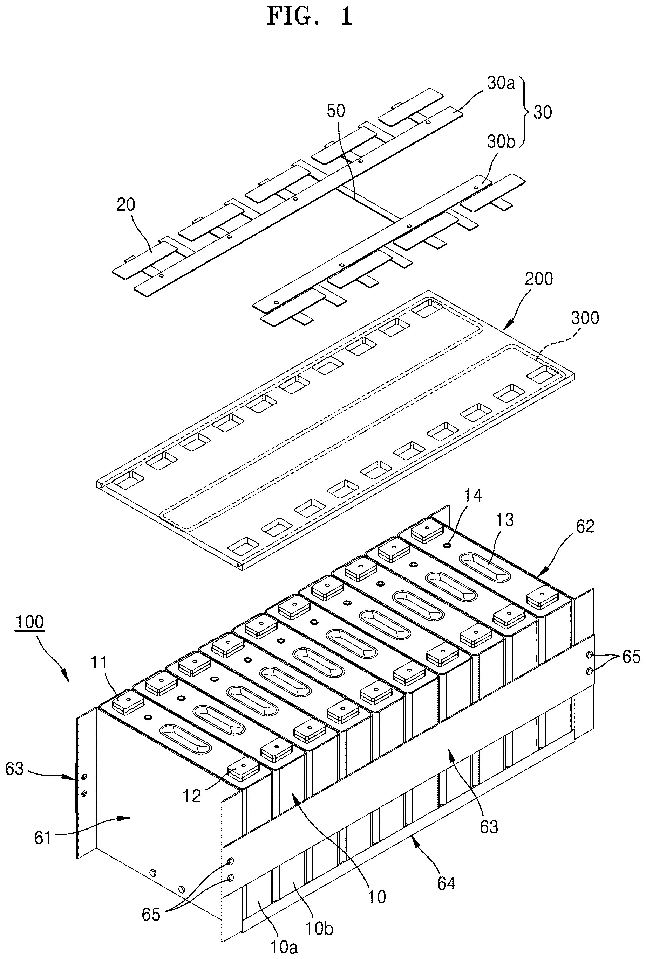

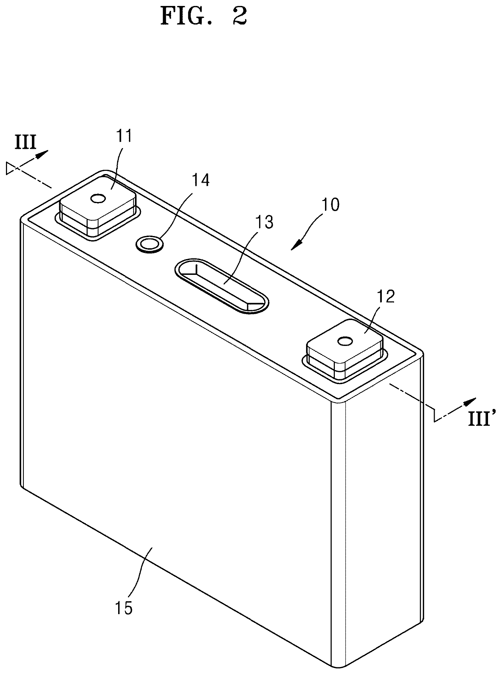

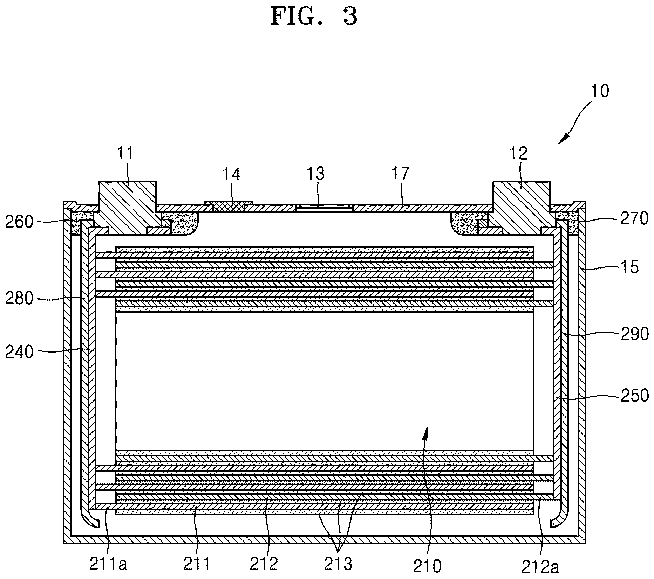

FIG. 1 is an exploded perspective view schematically illustrating an example of a battery module 100 according to embodiments of the disclosure, FIG. 2 is a perspective view schematically illustrating an example of a battery cell 10 of the battery module 100 of FIG. 1, and FIG. 3 is a cross-sectional view schematically illustrating an example of a cross-section taken along line III-III' of FIG. 2.

Referring to FIGS. 1 to 3, the battery module 100 may include a plurality of the battery cells 10 arranged in one direction and a cooling plate 200 positioned on the battery cells 10 and including a main flow path 300.

A plurality of the battery cells 10 may be arranged so that the wide surfaces (e.g. side surfaces) of the battery cells 10 face one another, and the plurality of battery cells 10 which are arranged may be fixed by housings.

The housings may include a plurality of end plates 61, 62, each facing a wide surface (e.g. side surface) of a battery cell 10, side plates 63 connecting the plurality of end plates 61, 62 to one another, and a bottom plate 64.

The side plates 63 may support a side surface of the battery cell 10, and the bottom plate 64 may support a bottom surface of the battery cell 10. In some embodiments, the plurality of end plates 61, 62, the side plates 63, and the bottom plate 64 each may be connected by a member such as a bolt 65.

The plurality of battery cells 10 each may include terminal portions which include a first terminal portion 11 and a second terminal portion 12, and a vent 13 which is a passage for discharging gas generated internally. The first terminal portion 11 and the second terminal portion 12 may have different polarities. In some embodiments, the first terminal portion 11 may be a positive terminal and the second terminal portion 12 may be a negative terminal. Conversely, the first terminal portion 11 may be a negative terminal and the second terminal portion 12 may be a positive terminal. That is, the first terminal portion 11 and the second terminal portion 12 may include different electrical polarities and each may be not limited to a specific polarity.

After the cooling plate 200 has been arranged on the battery cells 10, a battery cell 10a and a battery cell 10b, which are adjacent to one another, may be electrically coupled to one another in series or in parallel by a connection tab 20. In FIG. 1, a serial connection is described as an example, but it is not limited to this structure and various connection structures may be adopted as needed. In some embodiments, the number and arrangement of battery cells 10 are not limited to the structure illustrated in FIG. 1 and may be changed as needed.

The battery module 100 may include the connection tab 20 connecting the battery cell 10a to the battery cell 10b adjacent thereto and a protection circuit module 30 having an end portion connected to the connection tab 20.

The protection circuit module 30 may be a battery management system (BMS). In some embodiments, the connection tab 20 may include a body portion which contacts the terminal portion 11 or terminal portion 12 of a battery cell 10 and an extension portion which extends from the body portion and is connected to the protection circuit module 30.

The protection circuit module 30 may have electronic components, protection circuits, or the like mounted thereon and may be electrically coupled to a connection tab 20.

The protection circuit module 30 may include a first protection circuit module 30a and a second protection circuit module 30b extending from different positions along a direction in which a plurality of the battery cells 10 are arranged, and in this regard, the first protection circuit module 30a and the second protection circuit module 30b may be spaced apart from one another by a certain distance but positioned parallel to one another so that each may be electrically coupled to a connection tab 20 adjacent thereto.

In some embodiments, the first protection circuit module 30a may be formed to extend at a side of upper portions of the plurality of battery cells 10 along the direction in which the plurality of battery cells 10 are arranged, and the second protection circuit module 30b may be formed to extend at the other side of upper portions of the plurality of battery cells 10 along the direction in which the plurality of battery cells 10 are arranged, but the second protection circuit module 30b may be positioned spaced apart from the first protection circuit module 30a by a certain distance with vents 13 in between, but may be arranged parallel to the first protection circuit module 30a.

In this way, the two protection circuit modules 30a, 30b may be arranged parallel to and spaced apart from one another along the direction in which the plurality of the battery cells 10 are arranged, thereby minimizing the unnecessary area of a printed circuit board (PCB) constituting the protection circuit module 30.

In some embodiments, the first protection circuit module 30a and the second protection circuit module 30b may be connected to one another by a conductive connection member 50. In this regard, a side of the connection member 50 may be connected to the first protection circuit module 30a, and the other side may be connected to the second protection circuit module 30b, thereby allowing an electrical connection between the two protection circuit modules 30a, 30b.

The connection may be performed by soldering or welding such as resistance welding, laser welding, and projection welding, but is not limited thereto.

In some embodiments, the connection member 50 may be an electric wire, but is not limited thereto. In some embodiments, the connection member 50 may include a material having elasticity or flexibility. By means of such a connection member 50, the voltages, temperatures, and currents of a plurality of the battery cells 10 may be checked and managed to ensure they are normal.

That is, information such as voltages, currents, and temperatures received by the first protection circuit module 30a from the connection tabs 20 adjacent thereto and information such as voltages, currents, and temperatures received by the second protection circuit module 30b from the connection tabs 20 adjacent thereto may be managed in an integrated manner by the protection circuit module 30 through the connection member 50.

In some embodiments, when a battery cell 10 swells, shock may be absorbed by the elasticity or flexibility of the connection member 50, thereby preventing the first protection circuit module 30a and the second protection circuit module 30b from being damaged.

In some embodiments, the shape and structure of the connection member 50 are not limited to the shape shown in FIG. 1.

In this way, because the protection circuit module 30 is provided with the first protection circuit module 30a and the second protection circuit module 30b, the area of the PCB constituting the protection circuit module 30 may be minimized, thereby securing space inside the battery module 100. This may improve work efficiency by facilitating repairs when an abnormality is detected in the battery module 100 as well as the fastening work of connecting a connection tab 20 to the protection circuit module 30.

In some embodiments, a battery cell 10 may include a case 15, an electrode assembly 210 accommodated in the case 15, and an electrolyte, as shown in FIG. 3. The electrode assembly 210 and the electrolyte may react electrochemically to generate electricity.

The battery cell 10 may include at least one electrode assembly 210 wound with a separator 213, which is an insulator, interposed between a positive electrode 211 and a negative electrode 212, and the case 15 in which the electrode assembly 210 is accommodated.

A battery cell 10 according to embodiments is described as having a square shape as an example. However, the disclosure is not limited thereto, and the disclosure may be applied to various types of battery cells such as pouch battery cells and cylindrical battery cells.

The positive electrode 211 and the negative electrode 212 may include a coated portion, which is an area where an active material is applied to a current collector including a metal foil of a thin plate, and a non-coated portion 211a and a non-coated portion 212a, which are areas where the active materials are not applied.

The positive electrode 211 the negative electrode 212 may be wound with a separator 213, which is an insulator, interposed therebetween. However, the disclosure is not limited thereto, and the electrode assembly 210 described herein may be formed in a structure in which a positive electrode 211 and a negative electrode 212 including a plurality of sheets are alternately laminated with a separator 213 in between.

The case 15 may form the overall appearance of the battery cell 10 and include a conductive metal such as aluminum, an aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 each may include a conductive material. In this regard, the first terminal portion 11 and the second terminal portion 12 electrically coupled to the positive electrode 211 or the negative electrode 212 may be installed to protrude outward by penetrating the cap plate 17.

In some embodiments, outer main surfaces of upper pillars of the first terminal portion 11 and the second terminal portion 12 protruding outward from the cap plate 17 each may be screwed and may be fixed to the cap plate 17 with a nut.

However, the disclosure is not limited thereto, and the first terminal portion 11 and the second terminal portion 12 each may include a rivet structure and may be riveted or may be welded to the cap plate 17.

In some embodiments, the cap plate 17 may include a thin plate and may be coupled to the opening of the case 15, and an electrolyte injection port 14 into which a sealing plug may be installed may be formed in the cap plate 17, and the vent 13 with a notch formed may be installed.

The first terminal portion 11 and the second terminal portion 12 each may be electrically coupled to a current collector including a first current collector 240 and a second current collector 250 (hereinafter referred to as a positive electrode current collector and a negative electrode current collector) welded to a positive electrode non-coated portion 211a or a negative electrode non-coated portion 212a.

In some embodiments, the first terminal portion 11 and the second terminal portion 12 may be welded to the positive electrode current collector 240 and the negative electrode current collector 250. However, the disclosure is not limited thereto, and the first terminal portion 11 and the second terminal portion 12 and the positive electrode current collector 240 and the negative electrode current collector 250 may be formed by being integrally coupled to one another.

In some embodiments, an insulation member may be installed between the electrode assembly 210 and the cap plate 17. In this regard, the insulation member may include a first lower insulation member 260 and a second lower insulation member 270, and the first lower insulation member 260 and the second lower insulation member 270 each may be installed between the electrode assembly 210 and the cap plate 17.

In some embodiments, an end of a separation member which may be installed facing a side of the electrode assembly 210 may be installed between the insulation member and the first terminal portion 11 and the second terminal portion 12.

In this regard, the separation member may include a first separation member 280 and a second separation member 290.

In some embodiments, an end of the first separation member 280 and an end of the second separation member 290, which may be installed facing a side of the electrode assembly 210, may be installed between the first lower insulation member 260 and the second lower insulation member 270 and the first terminal portion 11 and the second terminal portion 12.

Finally, the first terminal portion 11 and the second terminal portion 12 welded to the positive electrode current collector 240 and the negative electrode current collector 250 may be coupled to the first lower insulation member 260 and the second lower insulation member 270 and an end of the first separation member 280 and an end of the second separation member 290.

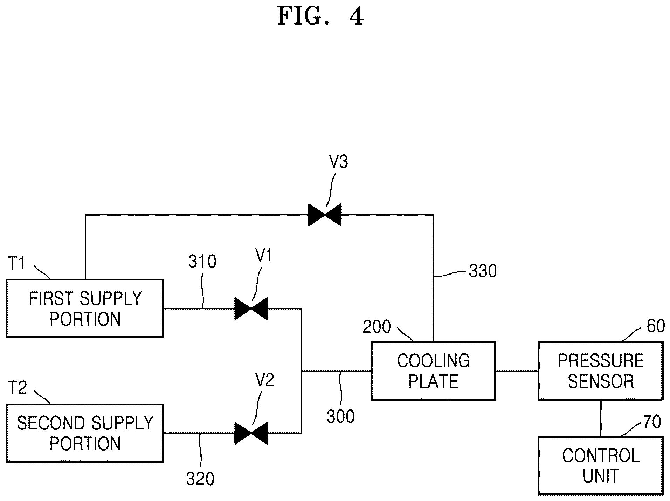

FIG. 4 is a block diagram of a fire extinguishing system according to embodiments of the disclosure.

Referring to FIG. 4, the battery module 100 may include a cooling plate 200 including a main flow path 300, a first supply portion T1 for supplying coolant to the main flow path 300, and a second supply portion T2 for supplying fire extinguishing fluid to the main flow path 300. The coolant and fire extinguishing fluid may be selectively supplied to the main flow path 300.

The cooling plate 200 may include a material having high thermal conductivity and rigidity, such as stainless steel, to cool the battery module 100 to a certain temperature, but is not limited thereto. The coolant may circulate along the main flow path 300 formed within the cooling plate 200 and may cool the battery by flowing through the interior of the main flow path 300.

The battery module 100 may further include a first flow path 310 connecting the main flow path 300 to the first supply portion T1 and a second flow path 320 connecting the main flow path 300 to the second supply portion T2. The first flow path 310 and the second flow path 320 each may be connected to the main flow path 300 through an inlet through which coolant and fire extinguishing fluid are introduced into the cooling plate 200.

Accordingly, the coolant supplied from the first supply portion T1 may circulate in the cooling plate 200 through the first flow path 310 and the main flow path 300, and the fire extinguishing fluid supplied from the second supply portion T2 may circulate in the cooling plate 200 through the second flow path 320 and the main flow path 300.

The battery module 100 may further include a third flow path 330 through which the coolant circulating through the main flow path 300 flows out and which is connected to the first supply portion T1. The coolant may be supplied from the first supply portion T1 and flow into the cooling plate 200 through the first flow path 310 and the main flow path 300 and circulate therein, thereby exchanging heat with the interior of the battery module 100. The coolant which has absorbed the heat may flow out of the cooling plate 200 through the third flow path 330 and be connected to the first supply portion T1. The coolant may be cooled in the first supply portion T1 and move again through the first flow path 310.

That is, the first supply portion T1, the first flow path 310, the main flow path 300, and the third flow path 330 may form a closed loop.

In some embodiments, a first valve V1, a second valve V2, and a third valve V3 may be positioned in the first flow path 310, the second flow path 320, and the third flow path 330, respectively. In some embodiments, each valve V1, V2, V3 may be a solenoid valve which automatically opens and closes a flow path in response to an electrical signal, but is not limited thereto.

The battery module 100 may further include a pressure sensor 60 which measures the pressure of the main flow path 300. Each valve may be opened and closed by a preset pressure, and a control unit 70 may be further included for this purpose.

In some embodiments, in case that the temperature of the battery module 100 rises, coolant may be injected at a high flow rate. In this regard, the pressure sensor 60 may detect the pressure of the main flow path 300 to control whether to open or close the first valve V1, the second valve V2, and the third valve V3. As the coolant is injected, the flow rate may decrease and the pressure of the main flow path 300 drop, and when the pressure drops to or below a certain level, the control unit 70 may determine whether to open or close each valve.

For additional fire extinguishing, the third valve V3 may be closed, the supply of coolant from the first supply portion T1 may be stopped, and the second valve V2 may be opened after the first valve V1 is closed. Accordingly, by opening the first valve V1, the supply of coolant supplied through the first flow path 310 is stopped, and by opening the second valve V2, the supply of fire extinguishing fluid through the second flow path 320 may be used to suppress a temperature rise and fire propagation in the battery module 100.

In this regard, the first valve V1 and the third valve V3 may be configured to operate inversely to the second valve V2. Therefore, the second valve V2 may be opened after the first valve V1 and the third valve V3 are closed. This is to ensure that the coolant supplied through the first flow path 310 and the fire extinguishing fluid supplied through the second flow path 320 are not mixed and are injected without time difference. In some embodiments, by blocking the third valve V3, backflow may be prevented and fire extinguishing fluid may move and be injected smoothly.

In case that the temperature does not drop or rises again after the injection of fire extinguishing fluid, the second valve V2 may be closed and the first valve V1 and the third valve V3 may be opened again. In this regard, the first supply portion T1 may supply coolant at a lower temperature, and coolant may be additionally injected through the first flow path 310. This may allow the battery module 100 and a pack to be extinguished.

As embodiments of the disclosure, a valve may be positioned at a point where the first flow path 310, the second flow path 320, and the main flow path 300 intersect with one another. In some embodiments, the valve may be a three-way valve for separating fluid, but is not limited thereto.

Normally, the valve may be opened in the direction connecting the first flow path 310 and the main flow path 300 to one another, and coolant may circulate in the cooling plate 200 to cool the battery module 100. In case that an event occurs, the valve may be adjusted to be opened in the direction connecting the second flow path 320 and the main flow path 300 to one another to allow fire extinguishing fluid to move. By determining whether the valve is opened or closed, the type and direction of the fluid flowing through the first flow path 310, the second flow path 320, and the main flow path 300 may be selectively controlled.

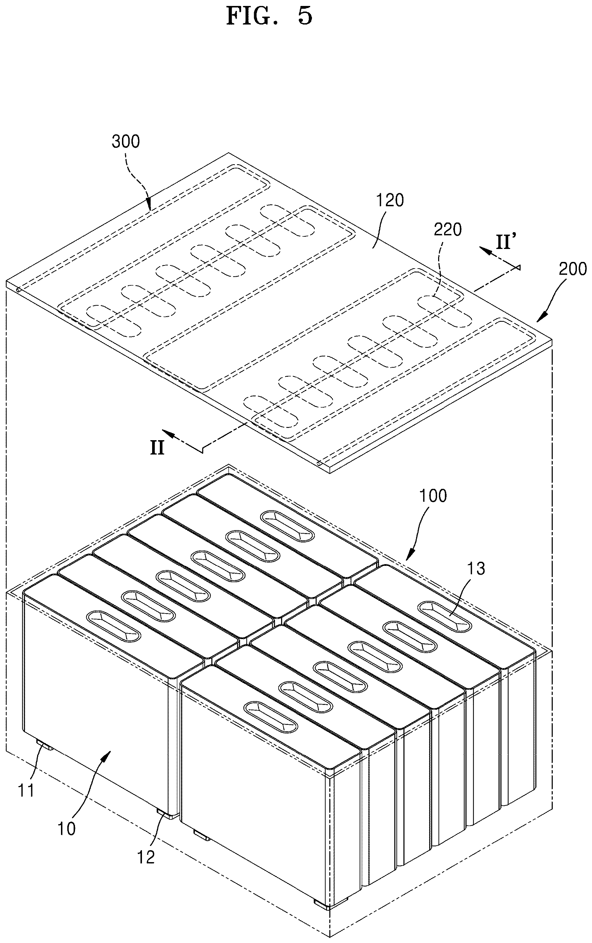

FIG. 5 is an exploded perspective view schematically illustrating an example of a battery module 100 according to embodiments of the disclosure.

Referring to FIG. 5, the battery module 100 may include a plurality of battery cells 10, each of which includes a vent 13.

In some embodiments, the cooling plate 200 may include a first region 120 and a second region 220. A melting point of the first region 120 may be higher than a melting point of the second region 220. In some embodiments, the second region 220 may be arranged at a position overlapping with the main flow path 300.

In case of a fire, a portion of the second region 220 with a low melting point may melt and holes may be formed in the cooling plate 200. Because the second region 220 is positioned to overlap with the main flow path 300, coolant may be discharged through this region, thereby primarily lowering the internal temperature of the battery. After a certain amount of discharge, the first valve V1 is blocked and the second valve V2 is opened through the pressure sensor 60 and the control unit 70, so that fire extinguishing fluid may be discharged through the same area, thereby secondarily suppressing a fire and preventing propagation thereof.

That is, when thermal runaway or fire occurs in a plurality of battery cells 10 and/or a battery module 100, an initial fire may be suppressed and extinguished through a battery module 100 in which coolant and fire extinguishing fluid are selectively supplied to the main flow path 300.

In some embodiments, the second region 220 may be positioned to overlap with a vent 13, and the vent 13 may be positioned at the bottom of a battery cell 10. That is, terminal portions 11, 12 of each of a plurality of the battery cells 10 may be positioned at the bottom and the vent 13 may be positioned at the top, and the second region 220 of the cooling plate 200 may be positioned on the vent 13 to overlap with the vent 13.

In case that thermal runaway occurs in a battery cell 10, high-temperature gas and flames may be released from the vent 13 of the battery cell 10. The second region 220 may be arranged to overlap with the vent 13, so that the second region 220 may be heated and deformed and may melt first because the second region 220 has a lower melting point than the first region 120. As a result, the coolant and fire extinguishing fluid circulating through the interior of the cooling plate 200 may be injected toward the battery cell 10 to extinguish a fire. That is, the purpose of fire extinguishing may be achieved more efficiently by arranging the vent 13 and the second region 220 to overlap with one another.

The shape of the main flow path 300 is not limited to that shown in FIGS. 1 and 5, and in case that the second region 220 and some regions overlap with one another so that the coolant which has circulated through the interior of the cooling plate 200 may be discharged, the main flow path 300 may have various shapes.

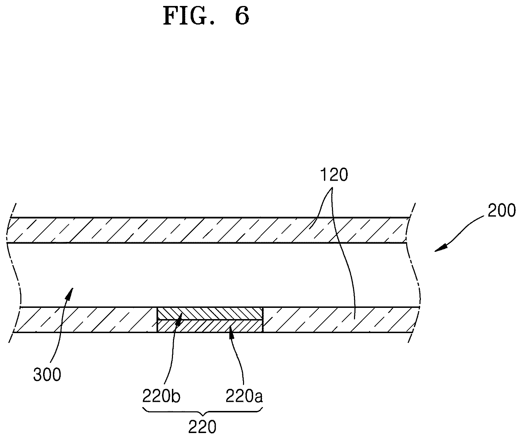

FIG. 6 is a cross-sectional view schematically illustrating an example of a cross section taken along by line II-II' of FIG. 5.

Referring to FIG. 6, the cooling plate 200 may include the first region 120 and the second region 220, and the second region 220 may include a first layer 220a and a second layer 220b on the first layer 220a along the height direction of the cooling plate 200, the layers having different materials.

The first layer 220a may constitute the outer surface of the cooling plate 200 which is in direct contact with a vent 13 of a battery cell, and the second layer 220b may constitute the inner surface of the cooling plate 200 which is in direct contact with coolant.

In case that the temperature of the battery rises, the first layer 220a may preferentially melt in response to the high-temperature gas released from a vent 13. Afterwards, the second layer 220b, which is weaker at high temperatures but stronger at low temperatures than the first layer 220a, may melt and coolant may finally be discharged. The material of the second layer 220b may have impact-resistant properties, thereby improving the durability of the cooling plate 200.

The first layer 220a may include a material which is strong at high temperatures and weak at low temperatures, such as TPE, but is not limited thereto. The second layer 220b may be a material which is impact-resistant and strong at low temperatures, such as HDPE, but is not limited thereto.

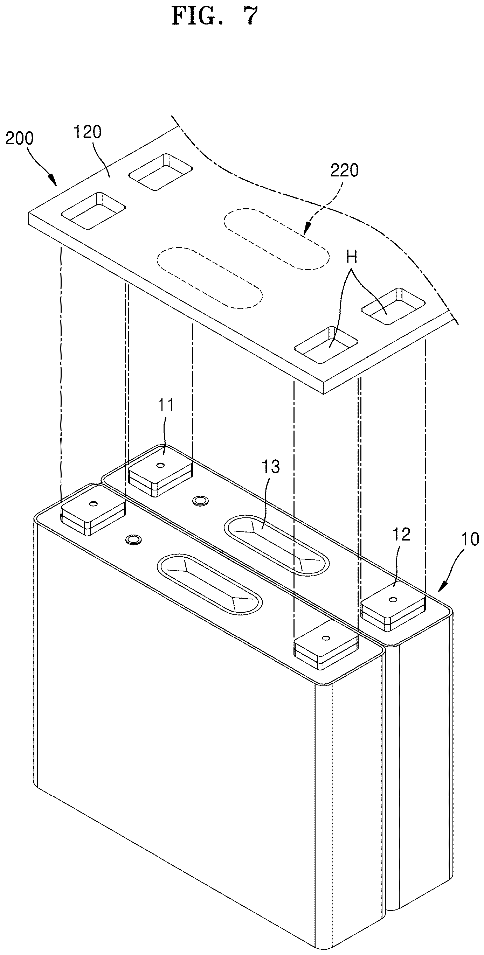

FIG. 7 is an enlarged perspective view of a battery cell 10 and the cooling plate 200 of FIG. 1.

Referring to FIG. 7, a battery module 100 according to embodiments of the disclosure may include a plurality of the battery cells 10, each including terminal portions 11, 12, and the cooling plate 200 may include a plurality of holes H through which the terminal portions 11, 12 are arranged to penetrate.

A plurality of holes H in the cooling plate 200 may be assembled in a form of being inserted into and penetrating the terminal portions 11, 12 of the battery cells 10, so that the cooling plate 200 may be positioned on the top of the battery cells 10. That is, the terminal portions 11, 12 may be positioned to protrude outward by penetrating a portion of the cooling plate 200.

This structure may normally exert an efficient cooling effect by bringing a battery cell 10 into direct contact with the cooling plate 200 and may quickly respond to a temperature increase and melt when a fire occurs.

Afterwards, the terminal portions 11, 12 which are protruding outward may be electrically coupled to one another. In some embodiments, the terminal portions 11, 12 may be connected to a bus bar or welded together.

In this regard, each of the inner surfaces of the plurality of holes H surrounding the terminal portions 11, 12, and each space between holes H which are adjacent to one another, may be coated with an insulator and have an insulation layer arranged thereon, thereby preventing leakage current when the terminal portions 11, 12 are electrically coupled to one another. In some embodiments, the inner surfaces of the holes H may be coated with PVC, but this is not limited thereto.

A cooling plate and extinguishing system, which are temperature management systems of the conventional battery, were designed separately, making it difficult to control a rapid temperature rise and extinguish a fire. Because the existing cooling plate has been used only for the purpose of controlling the temperature of a battery and the extinguishing system has been operated through a separate route, additional devices within a battery module were required. However, the disclosure may provide a fast, space- and energy-efficient fire extinguishing function by combining the cooling plate and extinguishing system to inject and discharge coolant and fire extinguishing fluid through the same flow path.

According to embodiments of the disclosure, a cooling plate may include a first region and a second region having different melting points, and when the battery temperature rises, the second region may melt, thereby discharging coolant and fire extinguishing fluid to lower the internal temperature and extinguish a fire. This may improve the stability of the battery module by preventing thermal runaway from spreading throughout the entire battery module.

However, the effects obtainable through the disclosure are not limited to the effects described herein, and other technical effects not mentioned will be clearly understood by those skilled in the art from the disclosure described herein.

Although the disclosure has been described herein by means of limited embodiments and drawings, the disclosure is not limited thereto, and it is obvious that various modifications and variations are possible within the equivalent scope of the technical idea of the disclosure and the claims to be described herein by a person skilled in the art to which the disclosure pertains.

## Claims

1. A battery module, comprising:
a plurality of battery cells;
a cooling plate positioned on the plurality of battery cells and including a main flow path;
a first supply portion for supplying coolant to the main flow path; and
a second supply portion for supplying fire extinguishing fluid to the main flow path,
wherein the coolant and the fire extinguishing fluid are selectively supplied to the main flow path.

2. The battery module of claim 2, further comprising:
a first flow path connecting the main flow path and the first supply portion to one another; and
a second flow path connecting the main flow path and the second supply portion to one another.

3. The battery module of claim 2, further comprising a third flow path through which the coolant circulated in the main flow path flows out and which is connected to the first supply portion,
wherein the first supply portion, the first flow path, the main flow path and the third flow path form a closed loop.

4. The battery module of claim 3, wherein a first valve, a second valve, and a third valve are positioned in the first flow path, the second flow path, and the third flow path, respectively.

5. The battery module of claim 4, further comprising:
a pressure sensor for measuring a pressure of the main flow path; and
a control unit for controlling operations of the first valve, the second valve, and the third valve based on a pressure sensed by the pressure sensor.

6. The battery module of claim 4 or 5, wherein the first valve and the third valve are configured to operate inversely to the second valve.

7. The battery module of any preceding claim, wherein:
the cooling plate includes a first region and a second region; and
a melting point of the first region is higher than a melting point of the second region.

8. The battery module of claim 7, wherein:
each of the plurality of battery cells includes a vent; and
the second region is positioned to overlap with the vent.

9. The battery module of claim 7 or 8, wherein the second region is arranged at a position overlapping with the main flow path.

10. The battery module of any preceding claim, wherein:
each of the plurality of battery cells includes terminal portions; and
the cooling plate includes a plurality of holes through which the terminal portions are arranged to penetrate.

11. A battery module, comprising:
a plurality of battery cells, each of which includes a vent; and
a cooling plate positioned on the plurality of battery cells,
wherein:
the cooling plate includes a first region and a second region;
the second region is positioned to overlap with the vent; and
a melting point of the first region is higher than a melting point of the second region.

12. The battery module of claim 11, wherein:
the second region includes a first layer and a second layer on the first layer; and
the first layer and the second layer include different materials and are arranged along a height direction of the cooling plate.

13. The battery module of claim 11 or 12, wherein:
the cooling plate includes a main flow path therein; and
the second region is positioned to overlap with the main flow path.

14. The battery module of claim 11, 12 or 13, wherein:
each of the plurality of battery cells includes terminal portions; and
the cooling plate includes a plurality of holes through which the terminal portions are arranged to penetrate.

15. The battery module of claim 14, wherein an insulation layer is arranged on an inner surface of each of the plurality of holes.
